Europäisches Patentamt

European Patent Office

Office européen des brevets

(19)

(11) **EP 1 125 390 B1**

(12) **EUROPÄISCHE PATENTSCHRIFT**

(45) Veröffentlichungstag und Bekanntmachung des
Hinweises auf die Patenterteilung:
**31.03.2004 Patentblatt 2004/14**

(21) Anmeldenummer: **99947417.4**

(22) Anmeldetag: **23.09.1999**

(51) Int Cl.⁷: **H04L 1/20**, H04L 27/26

(86) Internationale Anmeldenummer:
**PCT/EP1999/007101**

(87) Internationale Veröffentlichungsnummer:
**WO 2000/025471 (04.05.2000 Gazette 2000/18)**

(54) **VERFAHREN ZUR ANZEIGE DES MODULATIONSFEHLERS EINES MULTITRÄGER-SIGNALS**

METHOD FOR DISPLAYING THE MODULATION ERROR OF A MULTIPLE CARRIER SIGNAL

PROCEDE POUR L'AFFICHAGE DE L'ERREUR DE MODULATION D'UN SIGNAL DE
MULTIPORTEUSE

(84) Benannte Vertragsstaaten:
**DE DK FR GB NL**

(30) Priorität: **26.10.1998 DE 19849319**

(43) Veröffentlichungstag der Anmeldung:
**22.08.2001 Patentblatt 2001/34**

(73) Patentinhaber: **Rohde & Schwarz GmbH & Co. KG
D-81671 München (DE)**

(72) Erfinder:
• **WOLF, Peter
D-81543 München (DE)**
• **BALZ, Christoph
D-81543 München (DE)**

(74) Vertreter: **Körfer, Thomas, Dipl.-Phys. et al
Mitscherlich & Partner,
Patent- und Rechtsanwälte,
Sonnenstrasse 33
80331 München (DE)**

(56) Entgegenhaltungen:
**FR-A- 2 742 613          US-A- 5 153 527
US-A- 5 799 038**

• **"HP introduces industry's first test solution for
european DBV-T Services." HP PRESS
RELEASES, [Online] 15. Juli 1998 (1998-07-15),
XP002130133 Calif. Retrieved from the Internet:
<URL:www.tm.agilent.com/tmo/press/Englis
h/ PRTME600806.html> [retrieved on
2000-02-09]**

**Beschreibung**

Der Modulationsfehler (Modulation Error Ratio MER) ist eine wichtige .Kenngröße für die in der modernen Übertragungstechnik beispielsweise bei DAB (Digital Audio Broadcasting) bzw. DVB-T (Digital Video Broadcasting - terrestrial) benutzten OFDM (Orthogonal Frequency Division and Multiplexing)-Multiträger-Systeme, da er die mittlere bzw. maximale Abweichung der hierbei verwendeten Amplituden- und Phasenzustände (I- und Q-Werte) von den idealen Signalzuständen der verwendeten Digitalmodulation angibt und damit ein Maß für die Signalqualität darstellt. Der Modulationsfehler wird als Mittelwert und als Maximalwert angegeben. Zu seiner Berechnung werden alle Entscheidungsfelder des Modulations-Vektordiagramms nacheinander untersucht. Für die Ermittlung des Maximalwertes wird in jedem Entscheidungsfeld der maximale Betrag des Differenzvektors vom idealen Signalzustand zu den aufgetretenen Signalzuständen (Fehlervektor) gesucht. Außer dem Maximum der Zwischenergebnisse wird dann der Maximalwert des Modulationsfehlers $MER_{MAX}$ gerechnet nach der Beziehung

$$MER_{MAX} = 100 \cdot \frac{\max\{|Fehlervektor|\}}{\overline{VM}} \, [\%]$$

Dabei ist $\overline{VM}$ der quadratisch gewichtete Mittelwert der Amplitude aller idealen Signalzustände eines mit Nutzdaten modulierten Trägers der jeweils verwendeten Modulationsart, der für die am häufigsten benutzten Modulationsarten wie 16QAM usw. bekannt ist bzw. einfach berechnet werden kann und als Konstante bei der Berechnung eingesetzt wird.

Für den mittleren Modulationsfehler werden alle Beträge der Differenzvektoren vom idealen Zustand zum aufgetretenen Zustand quadratisch addiert und die Anzahl der Symbole gezählt. Anschließend wird der mittlere Modulationsfehler $MER_{RMS}$ nach der Beziehung

$$MER_{RMS} = 100 \cdot \frac{\sqrt{\frac{1}{n} \sum_{n} |Fehlervektor|^2}}{\overline{VM}} \quad [\%]$$

berechnet.

Beide nach obigen Beziehungen in Prozent berechnete Größen lassen sich auch im logarithmischen Maßstab in dB angeben nach folgender Umrechnung:

$$MER_{dB} = -20 \cdot \lg\left( \frac{MER[\%]}{100} \right) \quad [dB] \quad .$$

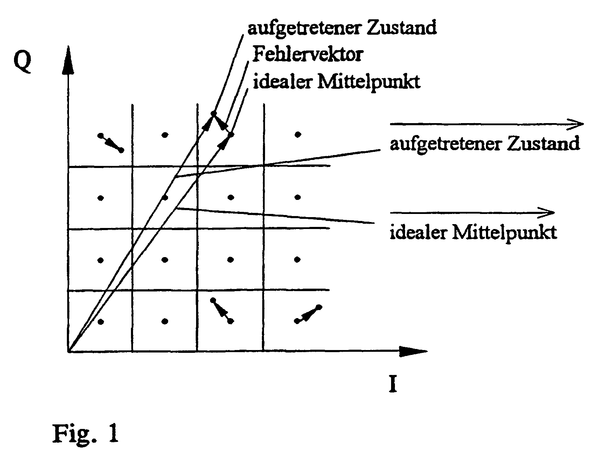

Der Begriff Modulationsfehler und die entsprechenden Berechnungsvorschriften hierfür sind von der DVB Measurement Group im ETR 290 für DVB-C und DVB-S festgeschrieben und genormt. Fig. 1 zeigt beispielhaft die zur Berechnung des Modulationsfehlers notwendigen Vektoren im ersten Quadranten und zwar für 64QAM.

Es ist bekannt, jeweils für einen einzigen Träger nach den obigen Formeln den Modulationsfehler zu berechnen und als Zahlenwert anzuzeigen. Es sind auch sogenannte Vektorsignalanalysatoren bekannt, mit denen dieser Modulationsfehler (MER) bestimmt und angezeigt werden kann ("HP indtroduces industry's first test solution for European DVB-T Services." HP PRESS RELEASES, [Online] 15. Juli 1998 (1998-07-15), XP002130133 Calif. Retrieved from the Internet: <URL: www.tm.agilent.com/tmo/press/English/PRTME600806.html> [retrieved on 2000-02-09]). Für Multiträgersysteme mit 1000 oder noch mehr einzelnen Trägern, wie dies bei DAB mit 1536 Trägern und bei DVB sogar mit 1705 bzw. 6817 Trägern der Fall ist, ist diese Art der Modulationsfehlerberechnung und Einzelträger Darstellung nicht mehr brauchbar.

Es ist daher Aufgabe der Erfindung, ein Verfahren aufzuzeigen, mit welchem der Modulationsfehler auf einfache Weise mit geringstmöglichem Rechenaufwand berechnet und außerdem so dargestellt werden kann, daß eine einfache und übersichtliche meßtechnische Auswertung für alle Träger möglich ist.

Diese Aufgabe wird für die Anzeige des mittleren Modulationsfehlers gemäß Anspruch 1 und für die Anzeige des maximalen Modulationsfehlers nach Anspruch 2 gelöst, wobei diese beiden Möglichkeiten vorzugsweise kombiniert angewendet werden, so daß einem Benutzer gleichzeitig der mittlere und der maximale Modulationsfehler in Abhängigkeit von der Frequenz angezeigt wird. Vorteilhafte Weiterbildungen ergeben sich aus den übrigen Unteransprüchen.

Der erste erfindungsgemäße Rechenschritt, für jedes aktuelle Modulationssymbol das Quadrat des Fehlervektors zu berechnen, ist an sich für einen einzelnen Träger bekannt (FR-A-2742613). Mit der Anwendung dieses Rechenschrittes bei einem Multiträgersignal in Kombination mit den darauffolgenden weiteren Rechenschritten gemäß Anspruch 1 bzw. 2 kann auf einfache Weise der mittlere bzw. maximale Modulationsfehler berechnet werden, das Ergebnis entspricht dabei den eingangs erwähnten Beziehungen, die aufgezeigten aufeinanderfolgenden Rechenschritte gemäß der Erfindung lösen diese Berechnung jedoch in kürzerer Rechenzeit und auch mit dazu erforderlichem geringerem Speicherumfang und können z.B. auf jedem handelsüblichen PC ausgeführt werden. Durch die Abspeicherung der einzelnen berechneten Werte in Speicherzellen eines genausoviel Zellen wie Träger aufweisenden Speichers steht das Ergebnis der Modulationsfehlerbestimmung unmittelbar in Zuordnung zu den einzelnen Trägern zur Verfügung und kann damit unmittelbar in Abhängigkeit von der Frequenz für das gesamte Multiträger-Frequenzband graphisch dargestellt werden. Damit kann ein Benutzer sofort feststellen, an welchen Stellen des Spektrums kritische Verhältnisse vorliegen und es kann somit erstmals auch ein Multiträger-System auf einfache Weise bezüglich Modulationsfehler meßtechnisch analysiert werden.

Die Erfindung wird im Folgenden anhand schematischer Zeichnungen an einem Ausführungsbeispiel näher erläutert:

Fig. 1     zeigt schematisch für einen Quadranten in der I/Q-Ebene die Signalkonstellation einer 64 QAM-Modulation,

Fig. 2     zeigt die Darstellung des maximalen bzw. mittleren Modulationsfehlers als Diagramm auf dem Bildschirm einer Anzeigeeinrichtung.

Bei Kenntnis der Signalkonstellation jedes einzelnen Trägers, wie dies für 64 QAM in Fig. 1 schematisch für einen Quadranten in der I/Q-Ebene dargestellt ist, wird gemäß der Erfindung für jedes aktuelle Symbol zunächst nach der Beziehung

$$m_k = |Fehlervektor_k|^2$$

das Quadrat des Fehlervektors des aktuellen Einzelträgers k berechnet. Da hier für jeden Träger nur ein einziger Punkt der Signalkonstellation ausgewertet wird, entfällt die Summation gemäß der eingangs erwähnten allgemeinen Gleichung.

In einem zweiten Rechenschritt wird dann das Ergebnis $m_k$ für jeden Einzelträger k separat mit dem Inhalt einer speziell für diesen Einzelträger reservierten Speicherzelle verglichen, die wiederum einem Speicher A1 zugeordnet ist. Dabei hat dieser Speicher A1 genausoviel Speicherplätze $K_{MAX} + 1$, wie Träger in dem OFDM-System vorhanden sind. Bei der dem aktuellen Träger k zugeordneten Speicherzelle des Speichers A1 wird geprüft, ob der aktuelle Meßwert $m_k$ größer ist als der in dieser Speicherzelle bereits abgespeicherte Wert. Ist der abgespeicherte Wert größer als der aktuelle Wert, bleibt der Speicherzelleninhalt unverändert. Ist der aktuelle Wert größer, wird dieser als neuer Wert in die Speicherzelle eingelesen. Auf diese Weise wird für jeden Träger der Maximalwert abgespeichert.

Gleichzeitig wird das Ergebnis der $m_k$ des aktuellen Modulationsfehlers für jeden Einzelträger separat mit dem Inhalt einer eigenen Speicherzelle des zweiten Speichers A2 verrechnet, welcher ebenfalls soviel Speicherplätze aufweist, wie Träger im OFDM-System vorhanden sind. Dabei wird der bisher in der Speicherzelle k stehende Wert $A2_k$ mit dem aktuellen Meßwert $m_k$ nach folgender Beziehung verrechnet:

$$A2_{k,l-1} = \frac{(A2_{k,l} \cdot l + m_k)}{(l+1)} \text{ (Iterationsformel)}$$

mit

$A2_{k,l+1}$: neuer Meßwert (Zeitpunkt l+1), der in Speicherzelle k des Speichers A2 abgelegt werden soll,
$A2_{k,l}$: bisheriger Meßwert (Zeitpunkt l) aus Speicherzelle k des Speichers A2,
$m_k$: aktuell gemessenes Fehlerquadrat für Träger k,
k: Trägernummer innerhalb des OFDM-Spektrums, wächst mit der Frequenz, $k = 0 \ldots K_{max}$,
l: Nummer des Symbols, wächst mit der Zeit, $0 \leq 1$.

Dieser Rechenschritt wird für alle Träger des Symbols wiederholt. Dann wird für das nächste Symbol der gleiche Prozeß wiederum für alle Träger ausgeführt. So entsteht im Laufe vieler Symbole im Speicher A2 ein repräsentatives Abbild des mittleren Modulationsfehlers als Funktion von der Frequenz bzw. der jeweiligen Trägernummer k. Diese Rechenschritte liefern exakt das gleiche Ergebnis wie die eingangs erwähnte genormte Gleichung.

Alternativ kann der dritte Rechenschritt auch auf folgende Weise aufgeteilt werden. Zunächst wird nach folgender Beziehung ein Zwischenwert berechnet:

$$A2'_{k,l+1} = A2'_{k,l} + m_k \text{ (Iterationsformel)}$$

mit

$A2'_{k,l+1}$: neuer Meßwert (Zeitpunkt l+1), der in Speicherzelle k des Speichers A2 abgelegt werden soll,
$A2'_{k,l}$: bisheriger Meßwert (Zeitpunkt l) aus Speicherzelle k des Speichers A2, $m_k$: aktuell gemessenes Fehlerquadrat für Träger k,
k: Trägernummer innerhalb des OFDM-Spektrums, wächst mit der Frequenz, $k = 0 \dots K_{max}$,
1: Nummer des Symbols, wächst mit der Zeit, $0 \le 1$.

Wenn nun der Speicher A2' für die Darstellung des mittleren Modulationsfehlers am Bildschirm herangezogen werden soll, muß der Inhalt jeder einzelnen Speicherzelle zuvor noch durch die Anzahl der bis dahin erfaßten Symbole l + 1 geteilt werden, die in einem eigenen Zähler ermittelt wird. Dann kann nach der Beziehung

$$A2_{k.l} = \frac{A2'_{k.l}}{l+1}$$

wieder der Endwert A2 berechnet werden. Diese Aufteilung ermöglicht einen schnelleren Programmablauf innerhalb eines digitalen Signalprozessors.

Aus den so berechneten Werten von A1 und A2 kann in einem abschließenden Rechenschritt dann jeweils der eigentliche mittlere bzw. maximale Modulationsfehler nach folgender Beziehung aus der für die jeweils angewandte Modulationsart bekannten Größe $\overline{VM}$ berechnet werden:

$$MER_{MAX.k} = 100 \cdot \frac{\sqrt{A1}_k}{\overline{VM}} \ [\%]$$

$$MER_{RMS,k} = 100 \cdot \frac{\sqrt{A2}_k}{\overline{VM}} \ [\%]$$

Wenn eine Anzeige in dB gewünscht wird, kann der Prozentwert nach folgender Beziehung umgerechnet werden:

$$MER_{dB} = -20 \cdot \lg\left(\frac{MER[\%]}{100}\right) \quad [dB] \quad .$$

Aus dem Maximalwert in Prozent wird dadurch ein Minimalwert in dB.

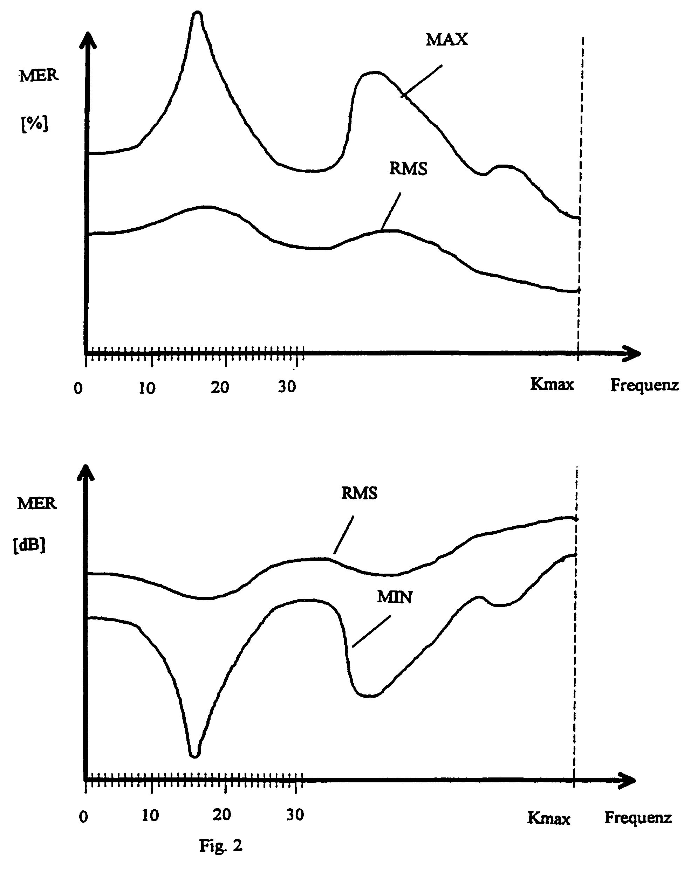

Fig. 2 zeigt die Darstellung des maximalen bzw. mittleren Modulationsfehlers in einem Diagramm auf dem Bildschirm einer Anzeigeeinrichtung, die Abszisse ist mit den Nummern der einzelnen Träger des OFDM-Spektrums skaliert, beispielsweise zwischen 0 bis 6816. Auf der Ordinate ist der für jeden Träger jeweils berechnete Modulationsfehler aufgetragen. Die bei DVB-T an sich vorhandenen insgesamt 1705 bzw. 6817 Träger könnten unter Umständen zu Auflösungsschwierigkeiten bei der Darstellung führen. Nachdem eine übliches LC-Display beispielsweise nur insgesamt 320 Pixelspalten aufweist, ist es vorteilhaft, das insgesamt darzustellende Gesamtspektrum in beispielsweise nur 320 Träger umfassende Einzelbereiche aufzuteilen und diese nacheinander darzustellen oder mehrere Träger gleichzeitig in einer Spalte des Displays zusammenzufassen.

**Patentansprüche**

1. Verfahren zur Anzeige des mittleren Modulationsfehlers $MER_{RMS}$ eines - Orthogonal Frequency Division and Mulitplexing (OFDM)-Multiträger-Signals,
**dadurch gekennzeichnet,**
**daß**

a) für jedes aktuelle Modulationssymbol l jedes einzelnen Trägers k des OFDM-Multiträgersignals das Quadrat $m_k$ des Fehlervektors nach der Beziehung

$$m_k = |Fehlervektor_k|^2$$

berechnet wird,
b) dieser Wert $m_k$ mit dem Inhalt einer dem gleichen Träger k zugeordneten Speicherzelle eines ersten Speichers (A2), der genausoviel Speicherzellen wie das OFDM-Signal Träger besitzt, nach der Beziehung

$$A2_{k,l+1} = \frac{(A2_{k,l} \cdot l + m_k)}{(l+1)}$$

mit

$A2_{k,l+1}$: neuer Meßwert (Zeitpunkt 1+1), der in Speicherzelle k des Speichers A2 abgelegt werden soll,
$A2_{k,l}$: bisheriger Meßwert (Zeitpunkt 1) aus Speicherzelle k des Speichers A2,
$m_k$: aktuell gemessenes Fehlerquadrat für Träger k,
k: Trägemummer innerhalb des OFDM-Spektrums, wächst mit der Frequenz, k = 0 ... $K_{max}$,
1: Nummer des Symbols, wächst mit der Zeit, $0 \leq 1$. ,

verrechnet wird,
c) aus diesen Werten der Speicherzellen dann nach der Beziehung

$$MER_{RMS,k} = 100 \cdot \frac{\sqrt{A2_k}}{\overline{VM}} \ [\%]$$

der mittlere Modulationsfehler $MER_{RMS}$ für jeden Träger berechnet wird, wobei $\overline{VM}$ der quadratisch gewichtete Mittelwert der Amplitude aller idealen Signalzustände der jeweils verwendeten Modulationsart eines mit Nutzdaten modulierten Trägers ist, und
d) dieser $MER_{RMS}$-Wert dann für jeden einzelnen Träger k als Ordinatenwert eines Diagramms mit der Anzahl der Träger als Abszisse graphisch dargestellt wird.

2. Verfahren nach Anspruch 1,
**dadurch gekennzeichnet,**
**daß** zur Anzeige des maximalen Modulationsfehlers $MER_{MAX}$ der nach Rechenschritt a) berechnete Wert $m_k$ mit dem Wert einer dem gleichen Träger k zugeordneten Speicherzelle eines zweiten Speichers (A1), der genausoviel Speicherzellen wie das OFDM-Signal Träger aufweist, verglichen wird, wobei der in dieser Speicherzelle abgespeicherte Wert durch den aktuellen Wert ersetzt wird, wenn der aktuelle Wert größer als der bereits abgespeicherte ist,

e) aus diesen Maximalwerten der Speicherzellen dann nach der Beziehung

$$MER_{MAX.k} = 100 \cdot \frac{A1_k}{\overline{VM}} \ [\%]$$

der maximale Modulationsfehler $MER_{MAX}$ für jeden Träger berechnet wird, wobei $\overline{VM}$ der quadratisch gewichtete Mittelwert der Amplitude aller idealen Signalzustände der jeweils verwendeten Modulationsart eines mit Nutzdaten modulierten Trägers ist, und

f) dieser MER-Max-Wert dann für jeden einzelnen Träger k als Ordinatenwert eines Diagramms mit der Anzahl der Träger als Abszisse graphisch dargestellt wird.

3. Verfahren nach Anspruch 1,
**dadurch gekennzeichnet,**
**daß** bei Verfahrensschritt b) nach Anspruch 1 zunächst nach der Beziehung

$$A2'_{k,l+1} = A2'_{k,l} + m_k$$

mit

$A2'_{k,l+1}$: neuer Meßwert (Zeitpunkt l+1), der in Speicherzelle k des Speichers A2 abgelegt werden soll,
$A2'_{k,l}$: bisheriger Meßwert (Zeitpunkt l) aus Speicherzelle k des Speichers A2,
$m_k$: aktuell gemessenes Fehlerquadrat für Träger k,
k: Trägernummer innerhalb des OFDM-Spektrums, wächst mit der Frequenz, k = 0 ... $K_{max}$,
1: Nummer des Symbols, wächst mit der Zeit, 0 ≤ 1.

ein Zwischenwert berechnet wird und dieser Zwischenwert A2' vor der Anzeige nach Verfahrensschritt d) durch die in einem gesonderten Zähler gezählte Anzahl der erfaßten Symbole gemäß der Beziehung

$$A2_{k,l} = \frac{A2'_{k,l}}{l+1}$$

geteilt wird.

4. Verfahren nach einem der vorhergehenden Ansprüche,
**dadurch gekennzeichnet,**
**daß** die zunächst in Prozent ermittelten Werte für $MER_{RMS}$ und/oder $MER_{MAX}$ vor ihrer frequenzabhängigen graphischen Darstellung in die Einheit dB nach der Beziehung

$$MER_{dB} = -20 \cdot \lg\left(\frac{MER[\%]}{100}\right) \quad [dB]$$

umgerechnet werden.

**Claims**

1. Method for displaying the mean modulation error $MER_{RMS}$ of an Orthogonal Frequency Division and Multiplexing (OFDM) multi-carrier signal,
**characterised in that**,

a) for every current modulation symbol l of each individual carrier k of the OFDM multi-carrier signal, the square $m_k$ of the error vector is calculated according to the equation

$$m_k = |\text{error vector}_k|^2$$

b) this value $m_k$ is calculated with the content of a memory cell allocated to the same carrier k in a first memory (A2), which possesses exactly the same number of memory cells as the OFDM signal carrier, according to the equation

$$A2_{k,l+1} = \frac{(A2_{k,l} \cdot l + m_k)}{(l+1)}$$

wherein

$A2_{k,l+1}$: new measured value (time l+1), which is to be stored in memory cell k of memory A2,

$A2_{k,l}$: previous measured value (time l) from memory cell k of memory A2,

$m_k$: currently measured error squared for carrier k,

k: carrier number within the OFDM spectrum, grows with frequency, $k = 0...K_{max}$,

1: number of the symbol, grows with time, $0 \leq 1$,

c) from these values of the memory cells, the mean modulation error $MER_{RMS}$ for every carrier is calculated according to the equation

$$MER_{RMS}, k = 100 \cdot \frac{\sqrt{A2_k}}{\overline{VM}} \ [\%]$$

wherein $\overline{VM}$ is the quadratically weighted mean value for the amplitude of all ideal signal conditions for the modulation type used in each case of a carrier modulated with useful data, and

d) this $MER_{RMS}$ value is then presented graphically for each individual carrier k as an ordinate value in a graph with the number of the carrier as the abscissa.

2. Method according to claim 1,
   **characterised in that**,
   in order to display the maximum modulation error $MER_{MAX}$, the value $m_k$, calculated in accordance with step a) of the method, is compared with the value of a memory cell in a second memory (A1) allocated to the same carrier k, which provides exactly the same number of memory cells as the OFDM signal carrier, wherein the value stored in this memory cell is replaced by the current value, if the current value is greater than the value already stored,

   e) that from these maximum values of the memory cells, the maximum modulation error $MER_{MAX}$ is then calculated for every carrier according to the equation

   $$MER_{MAX}, k = 100 \cdot \frac{\sqrt{A1_k}}{\overline{VM}} \ [\%]$$

   wherein $\overline{VM}$ is the quadratically weighted mean value for the amplitude of all ideal signal conditions for the modulation type used in each case of a carrier modulated with useful data,
   and

   f) this $MER_{MAX}$ value is then presented graphically for each individual carrier k as an ordinate value in a graph with the number of the carrier as the abscissa.

3. Method according to claim 1,
   **characterised in that,**
   in the case of step b) of the method according to claim 1, an intermediate value is first calculated according to the equation

   $$A2'_{k,l+1} = A2'_{k,l} + m_k$$

wherein

$A2'_{k,l+1}$: new measured value (time l+1), which is to be stored in memory cell k of memory A2,

$A2'_{k,l}$: previous measured value (time l) from memory cell k of memory A2,

$m_k$: currently measured error squared for carrier k,

k: carrier number within the OFDM spectrum, grows with frequency, $k = 0...K_{max}$,

1: number of the symbol, grows with time, $0 \leq l$

an intermediate value is calculated, and before display according to step d) of the method, this intermediate value A2' is divided by the number of registered symbols counted in a separate counter according to the equation

$$A2_{k,l} = \frac{A2'_{k,l}}{l+1}$$

**4.** Method according to any one of the preceding claims,
**characterised in that**,
before their frequency-dependent graphic display, the values for $MER_{RMS}$ and/or $MER_{MAX}$, initially determined as a percentage, are converted into the unit dB according to the equation

$$\mathrm{MER_{dB}} = -20.\lg \left( \frac{MER[\%]}{100} \right) \; [\mathrm{dB}].$$

**Revendications**

**1.** Procédé pour l'affichage de l'erreur de modulation moyenne $MER_{RMS}$ d'un signal de multiporteuse de Orthogonal Frequency Division and Multiplexing) (OFDM),
**caractérisé en ce que**

a) pour chaque symbole de modulation l actuel de chaque porteuse k individuelle du signal de multiporteuse, on calcule le carré $m_k$ du vecteur erreur selon la relation

$$m_k = |vecteurerreur_k|^2$$

b) cette valeur $m_k$ est calculée avec le contenu d'une cellule de mémoire, attribuée à la même porteuse k, d'une première mémoire (A2), qui a autant de cellules de mémoire que le signal OFDM a des porteuses, selon la relation

$$A2_{k.l+1} = \frac{(A2_{k.l \cdot l} + m_k)}{(l+1)}$$

avec

$A2_{k, l+1}$ : nouvelle valeur de mesure (instant l + 1), qui doit être déposée dans la cellule de mémoire k de la mémoire A2,
$A2_{k, 1}$ : ancienne valeur de mesure (instant l) constituée de la cellule de mémoire k de la mémoire A2,
$m_k$ : carré d'erreur mesuré actuellement pour la porteuse k,
k : numéro de porteuse à l'intérieur du spectre de OFDM, croît avec la fréquence, $k = 0...K_{max}$,

l : numéro du symbole, croît avec le temps, $0 \leq$ à 1.

c) à partir de ces valeurs des cellules de mémoire, on calcule ensuite selon la relation

$$\mathrm{MER_{RMS.k}} = 100 \cdot \frac{\sqrt{A2}_k}{\overline{VM}} \ [\%]$$

l'erreur de modulation moyenne $\mathrm{MER_{RMS}}$ pour chaque porteuse, $\overline{VM}$ étant la valeur moyenne pondérée au carré de l'amplitude de tous les états de signal idéaux du type de modulation respectivement utilisé d'une porteuse modulée avec des données utiles, et

d) cette valeur $\mathrm{MER_{RMS}}$ est représentée graphiquement alors pour chaque porteuse k individuelle comme valeur d'ordonnée d'un diagramme avec le nombre des porteuses en abscisse.

2. Procédé selon la revendication 1,
**caractérisé en ce que**
pour l'affichage de l'erreur de modulation maximale $\mathrm{MER_{MAX}}$, on compare la valeur $m_k$ calculée selon l'étape de calcul a) avec la valeur d'une cellule de mémoire, attribuée à la même porteuse k, d'une seconde mémoire (A1), qui présente autant de cellules de mémoire que le signal OFDM a de porteuses, la valeur mémorisée dans cette cellule de mémoire étant remplacée par la valeur actuelle lorsque la valeur actuelle est supérieure à la valeur déjà mémorisée,

e) à partir de ces valeurs maximales des cellules de mémoire, on calcule alors selon la relation

$$\mathrm{MER_{MAX.k}} = 100 \cdot \frac{\sqrt{A1}_k}{\overline{VM}} \ [\%]$$

l'erreur de modulation maximale $\mathrm{MER_{MAX}}$ pour chaque porteuse, $\overline{VM}$ étant la valeur moyenne pondérée au carré de l'amplitude de tous les états de signal idéaux du type de modulation respectivement utilisé d'une porteuse modulée avec des données utiles, et

f) cette valeur maximale MER est représentée graphiquement alors pour chaque porteuse k individuelle comme valeur d'ordonnée d'un diagramme avec le nombre des porteuses comme abscisse.

3. Procédé selon la revendication 1,
**caractérisé en ce que**
lors de l'étape de procédé b) selon la revendication 1, on calcule d'abord une valeur intermédiaire selon la relation

$$A2'_{k,\, l+1} = A2'_{k,\, l} + m_k$$

avec

$A2'_{k,\, l+1}$ : nouvelle valeur mesurée (instant $l + 1$) qui doit être déposée dans la cellule de mémoire k de la mémoire A2,
$A2'_{k,\, 1}$ : ancienne valeur de mesure (instant l) provenant de la cellule de mémoire k de la mémoire A2, $m_k$ : carré d'erreur mesuré actuellement pour la porteuse k,
k : numéro de porteuse à l'intérieur du spectre OFDM, croît avec la fréquence, $k = 0 \dots K_{max}$,
l : numéro du symbole, croît avec le temps, $0 \leq 1$

et cette valeur intermédiaire A2' est divisée avant l'affichage selon l'étape de procédé d) par le nombre, divisé dans un compteur séparé, des symboles enregistrés selon la relation

$$A2_{k.1} = \frac{A2'_{k.l}}{l+1}$$

4. Procédé selon l'une quelconque des revendications précédentes,

**caractérisé en ce que**

les valeurs calculées d'abord en pourcentage pour $MER_{RMS}$ et/ou $MER_{MAX}$ sont converties avant leur représentation graphique dépendante de la fréquence dans l'unité dB selon la relation

$$MER_{dB} = -20.1g\left(\frac{MER[\%]}{100}\right) \quad [dB]$$

Fig. 1

Fig. 2